# EUROPEAN PATENT SPECIFICATION

(11) **EP 0 434 053 B1**
(45) Date of publication and mention of the grant of the patent: **27.07.1994**
(21) Application number: 90124936.7
(22) Date of filing: 20.12.1990
(51) Int. Cl.: C22B 3/10

(54) **Process for treatment of nickel magnesium silicate ores**
Verfahren zur Behandlung von Nickel-Magnesium-Silikaterzen
Procédé de traitement de minerais de nickel-magnésium silicatés

(30) Priority: 20.12.1989 JP 330127/89
(43) Date of publication of application: 26.06.1991
(73) Proprietor: NISSHIN STEEL CO., LTD., Chiyoda-ku Tokyo 100 (JP)
(72) Inventor: Nagabayashi, Retsu Nisshin-Seiko K.K., Shinnanyo-shi, Yamaguchi-ken (JP); Hasegawa, Kazuo Nisshin-Seiko K.K., Ichikawa-shi, Chibe-ken (JP); Hasegawa, Morihiro Nisshin-Seiko K.K., Kure-shi, Yamaguchi-ken (JP); Kinugase, Masayuki Nisshin-Seiko K.K., Kure-shi, Yamaguchi-ken (JP)
(74) Representative: von Füner, Alexander, Dr.

(56) References cited:
- FR-A- 2 270 334
- FR-A- 2 287 516
- US-A- 3 661 564
- PATENT ABSTRACTS OF JAPAN, vol. 13, no. 179 (C-590), 26th April 1989;& JP-A-1 008 226 (NISSHIN STEEL) 12-01-1989
- PATENT ABSTRACTS OF JAPAN, vol. 13, no. 56 (C-566), 8th February 1989;& JP-A-63 247 319 (NISSHIN STEEL) 14-10-1988
- PATENT ABSTRACTS OF JAPAN, vol. 13, no. 315 (C-619), 18th July 1989;& JP-A-1 100 228 (NISSHIN STEEL) 18-04-1989

## Description

### Field of the Invention

The present invention relates to a process for treatment of nickel magnesium silicate ores such as garnierite.

### Background of the Invention

Today, a widely employed industrial process for the production of ferronickel from nickel magnesium silicate ores comprises drying and roasting a nickel ore in a kiln without concentrating nickel and melting the thus treated ore including gangue minerals.

However, since nickel magnesium silicate ores contain a large amount of gangue and the nickel content thereof is only about 2 percent, the useless gangue minerals also have to be melted at a high temperature (about 1600°C). That is, expensive electric energy is wasted and a large amount of slag is produced and has to be disposed. Under the circumstances, there is a strong need for establishment of a technology for concentration of nickel, that is, a technology for efficiently removing the gangue from nickel magnesium silicate ores.

Although there have been several reports on concentration and separation of nickel of nickel oxide ores, none of them is yet commercially employed.

Processes for treatment of magnesio-nickel silicate ores including roasting at 250-450°C are known from JP-A-1 008 226 and JP-A-63 247 319.

We previously invented a process for treatment of magnesium nickel silicate ores (Japanese Laid-Open Patent Publication Hei 1-100228(1989) (see also JP-A-1 100 228)). According to this process, nickel magnesium silicate ores are leached with hydrochloric acid so as to produce a residue mainly consisting of silica and a leach containing nickel, iron and magnesium (leaching step), the leach is dried and roasted at a temperature not lower than 250°C and lower than 450°C so as to collect all of the nickel and iron and a portion of the magnesium as a water-insoluble mass and to recover hydrogen chloride (drying-roasting step), the collected product of roasting is washed with water so as to separate the product of roasting into a water-insoluble mass containing all of the iron and nickel and a portion of the magnesium and a magnesium chloride solution, and thus nickel is concentrated.

In processes in which drying and roasting are simultaneously effected, however, dried materials adhere to the surface of the roasted product and thus poorly roasted materials mingle with the roasted product. This makes it difficult to produce nickel concentrate with a consistent nickel content. Further in such processes, residence time distribution is wide since drying and roasting are simultaneously carried out in a reactor. This means that it is difficult to obtain product of the roasting of the intended composition consistently. Especially, when the roasting temperature is high and the residence time is long, conversion of magnesium to water-insoluble materials increases and thus degrades the nickel content of the nickel concentrate.

We have found that a high grade nickel concentrate can be obtained by separating the drying step and the roasting step, whereby the residence time of particles can be properly controlled in the roasting step and thus nickel and iron ore can be completely made water-insoluble and conversion of magnesium to water-insoluble materials is well controlled.

### Summary of the Invention

This invention provides a process for treatment of nickel magnesium silicate ores comprising a step of leaching the ore with hydrochloric acid to obtain a leaching residue mainly consisting of silica and a leach containing nickel, iron and magnesium (leaching step); a step of drying the leach to obtain a dry product mainly consisting of chlorides of nickel, iron and magnesium and to recover unreacted hydrochloric acid (drying step); a step of roasting the dry product at a temperature of not lower than 150°C and lower than 250°C to convert all of the nickel and iron and a portion of the magnesium into a water-insoluble mass and to recover hydrogen chloride (roasting step) and a step of washing the product of the roasting with water to separate the product into a water-insoluble mass containing all of the nickel and iron and a portion of the magnesium of the ore and an aqueous solution of magnesium chloride (washing step).

The product of the washing step can be used as a material for steelmaking without any additional processing. Optionally, however, it can be further roasted to remove the contained chlorine and thus the product can be used as oxides of nickel, iron and magnesium.

The leaching residue mainly consisting of silica is washed with an acid or water to obtain silica powder.

The magnesium chloride solution from the washing step is dried to produce magnesium chloride hydrate.

The hydrate is roasted, whereby magnesium oxide is produced and hydrogen chloride is recovered.

In the process of the present invention, the steps other than the drying step and the roasting step are the same as in the prior art process. At the drying step, the leach is dried by means of a spray-drier, whereby a dry product comprising chlorides of nickel, iron and magnesium is obtained.

The dried product obtained is roasted at a temperature not lower than 150°C and lower than 250°C in the roasting step. Although the method of roasting is not specifically limited, fluidized bed roasting, wherein the dried powder is roasted by hot air in a roasting furnace, is preferred.

By the roasting, the nickel and iron and a portion of the magnesium are converted to water-soluble materials.

In the process of the present invention, the material can be roasted with a suitable residence time appropriate for the employed roasting temperature and Reynolds number.

When the Reynolds number is 1 or more and the residence time is 5 hours or longer in the roasting step, employment of a roasting temperature of not higher than 150°C is not desirable since conversion of nickel to water-insoluble materials is insufficient and thus the recovery of nickel is poor. On the other hand, employment of a temperature of not lower than 250°C is not desirable since conversion of magnesium to water-insoluble materials increases and the quality of the produced nickel concentrate is degraded.

As described above, the process of the present invention is advantageous over the prior art process in that nickel and iron in the ore are completely made water-insoluble and conversion of magnesium to water-insoluble materials is suppressed. That is, the magnesium content of the produced nickel concentrate is low and thus the amount of the slag produced in the melting of the nickel source material is drastically reduced.

The invention will now be described below in detail with reference to the attached drawings.

### Brief Description of the Drawings

Fig. 1 is a graph which shows the relation between water-insoluble compounds of nickel, iron and magnesium in the product of roasting and the roasting time when 50g of a nickel magnesium silicate ore having the particle size of not larger than 0.1mm is roasted at 200°C with an air flow of 0.5Nm³/h; and
Fig. 2 is a schematic illustration of an example of the apparatus for drying and roasting ores separately used in the process of the present invention.

### Specific Disclosure of the Invention

### Experiment

The time course change of the contents of the water-insoluble compounds of nickel, iron and magnesium was observed during the roasting of the residue of leaching of nickel magnesium silicate ore.

A nickel magnesium silicate ore was crushed and leached with hydrochloric acid, and the leach (filtrate) was formed into a dry powder having a particle size of not more than 0.1mm in diameter. The dry powder (50g) was introduced into a laboratory-scale fluidized bed reactor having a diameter of 50mm into which hot air of 200°C was blown at the rate of 0.5Nm³/hr for roasting.

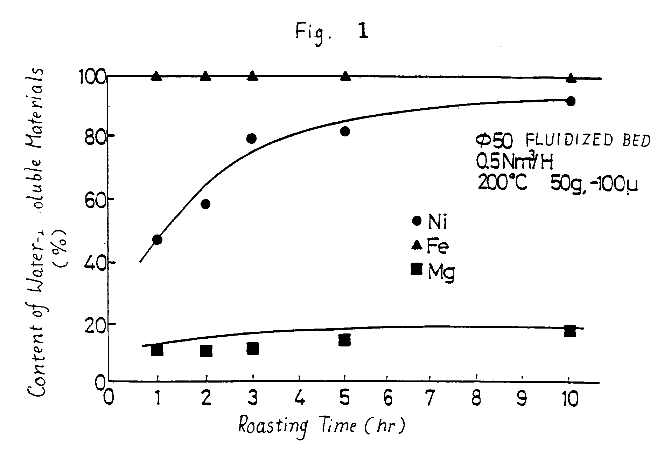

The roasting was carried out for 1, 2, 3, 4, 5 and 10 hours, and the content of the water-insoluble compounds of the products was measured. The results are shown in Fig. 1.

The conversion of nickel into water insoluble materials rapidly increases as the roasting time increases. The content of the water-insoluble compounds of magnesium tends to increase as the roasting time increases. Iron completely turns into water-insoluble materials within 1 hour.

That is to say, when the residence time is short, there is a tendency for the conversion of nickel into water-insoluble materials to be insufficient. When the residence time is too long, the content of water-insoluble magnesium compounds increases degrading the nickel concentrate.

Now the invention will be illustrated by working examples.

### Example 1.

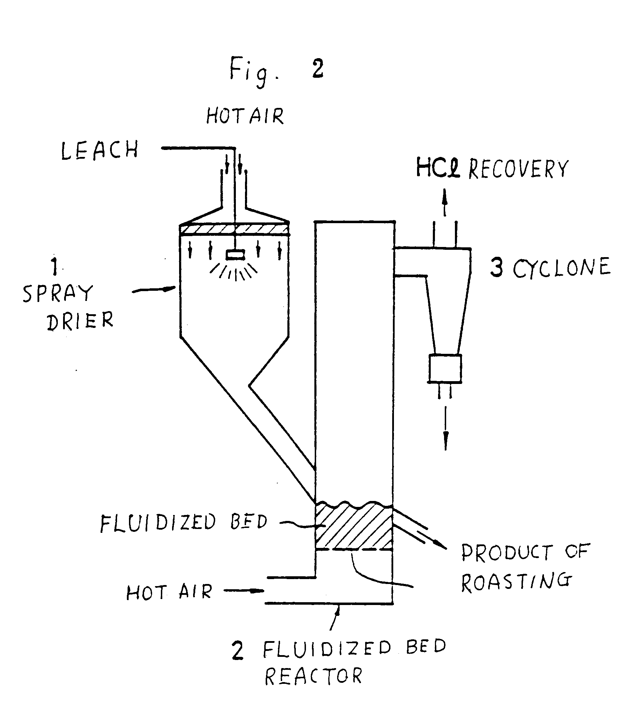

A nickel magnesium silicate ore of the composition of which is indicated in Table 1 was crushed into a powder of 80 mesh or finer. Seventy (70) kg of the crushed ore was leached with 230 liters of a 6N hydrochloric acid solution of 60-90°C for 2 hours so as to extract nickel, iron and magnesium. The leach was filtered so as to remove silica. The concentrations of nickel, iron and magnesium in the filtrate were 6.29 mg/ml, 26.28 mg/ml and 35.70 mg/ml respectively. Almost 100% of the nickel and iron and about 80% of the magnesium in the ore were leached. The leach was dried and roasted using an apparatus as shown in Fig. 2. That is, the leach was introduced into a spray drier 1 wherein it was dried giving chlorides. The chlorides were transferred into a fluidized bed reactor 2 which is connected to the spray-drier through an inclined conduit and was kept at 210°C. Hot air was blown into the reactor for roasting through a distributor provided at the bottom of the reactor. The residence time was 5-10 hours and the Reynolds number was 1-10. The product of roasting was taken out through an exit provided at the bottom of the reactor. The hot air containing hydrogen chloride was led to a cyclone 3 connected to the reactor at the top thereof, wherein fine particles which escaped from the reactor were collected, and the remaining air was transferred to a hydrogen chloride recovery apparatus (not shown). The product of roasting was subjected to extraction with water and a water-insoluble mass and an extract containing magnesium chloride were obtained. The water-insoluble mass contained 7.94% nickel, 33.87% iron and 13.81% magnesium. The recovery of nickel was 100%.

### Comparative Example 1

The same nickel magnesium silicate ore as used in Example 1 was leached with hydrochloric acid in the same manner as in Example 1 and a leach was obtained. The leach was dropped or sprayed into a fluidized bed reactor having a diameter of 450mm kept at 200°C, and thus drying and roasting were simultaneously effected. The obtained product of roasting was subjected to extraction with water, and a water-insoluble mass and an extract containing magnesium chloride were obtained. The obtained water insoluble mass contained 7.50% nickel, 31.48% iron and 15.04% magnesium. The recovery of nickel was 99.6%.

### Comparative Example 2

The same nickel magnesium silicate ore as used in Example 1 was subjected to extraction with hydrochloric acid and a leach was obtained by filtration. The leach was dried by the spray drier 1 to obtain chlorides. The chlorides were then roasted in the fluidized bed reactor 2 kept at 140°C. The average residence time and Reynolds number were the same as in Example 1. The obtained product of roasting was subjected to extraction with water, and a water-insoluble mass and an aqueous solution containing magnesium chloride were obtained. The water-insoluble mass contained 9.06% nickel, 46.57% iron and 7.73% magnesium. The nickel recovery was only 78.8%, 21.2% less than in Example 1.

### Comparative Example 3

The same nickel magnesium silicate ore as used in Example 1 was subjected to extraction with hydrochloric acid and a leach was obtained by filtration. The leach was dried by the spray drier 1 to obtain chlorides. The chlorides were then roasted in the fluidized bed reactor kept at 140°C. The average residence time and Reynolds number were the same as in Example 1. The obtained product of roasting was subjected to extraction with water, and a water-insoluble mass and an aqueous solution containing magnesium chloride were obtained. The water-insoluble mass contained 6.96% nickel, 28.23% iron and 17.31% magnesium. The nickel recovery was 100%. However, the nickel content of the product was lower than that of the product of Example 1 by 21.2%.

The results of Example 1 and Comparative Examples 1, 2 and 3 are summarized in Table 2. The nickel content of the nickel concentrate of Example 1 is higher than that of Comparative Example 1 by 0.44%. The magnesium content is lower by 1.23%. These facts mean that the ore was efficiently treated. In Comparative Example 2, the nickel recovery was only 78.8%, which was lower than that in Example 1 by 21.2%. In Comparative Example 3, the nickel recovery was 100% but the nickel content was lower than that in Example 1 by 0.98%.

**Table 1**

| | Ni | Fe | MgO | SiO₂ |
|---|---|---|---|---|
| Ni-Mg-SiO₂ Ore in General | 1.0-2.5 | 9.0-15 | 20-30 | 35-50 |
| Ore Used | 2.44 | 10.66 | 28.17 | 40.45 |
| (% content) | | | | |

**Table 2**

| | | Ni | Fe | SiO₄ | Mg | Ni recovery |
|---|---|---|---|---|---|---|
| Ex. 1 | | 7.94 | 33.37 | 0.0 | 13.81 | 100 |
| Com. Ex. | 1 | 7.50 | 31.48 | 0.0 | 15.04 | 99.6 |
| | 2 | 9.06 | 46.57 | 0.0 | 7.73 | 78.8 |
| | 3 | 6.96 | 28.23 | 0.0 | 17.31 | 100 |
| (% content & recovery) | | | | | | |

The above described differences between the working example and comparative examples may seem to be slight. In fact, the difference between Example 1 and Comparative Example 1 is that the product of Example 1 is 0.044% higher in the nickel content and 1.23% lower in the magnesium content than the product of Comparative Example 1. But when the product of Comparative Example 1 is used for making AISI 304 steel, about 330 kg of slag is produced per ton steel while when the product of Example 1 is used about 290 kg of slag is produced per ton steel. Although the actual difference is reduced because some amount of a flux is used, the difference is commercially significant when power cost, etc. are considered.

## Claims

1. A process for treatment of nickel magnesium silicate ores comprising a step of leaching the ore with hydrochloric acid to obtain a leaching residue mainly consisting of silica and a leach containing nickel, iron and magnesium (leaching step); a step of drying the leach to obtain a dry product mainly consisting of chlorides of nickel, iron and magnesium and to recover unreacted hydrochloric acid (drying step); a step of roasting the dry product at a temperature of not lower than 150°C and lower than 250°C to convert all of the nickel and iron and a portion of the magnesium into a water-insoluble mass and to recover hydrogen chloride (roasting step) and a step of washing the product of the roasting with water to separate the product into a water-insoluble mass containing all of the nickel and iron and a portion of the magnesium of the ore and an aqueous solution of magnesium chloride (washing step).

## Patentansprüche

1. Verfahren zur Behandlung von Nickel-Magnesium-Silikaterzen, das folgende Stufen umfaßt:
eine Stufe zur Auslaugung des Erzes mit Chlorwasserstoffsäure zur Erzielung eines Laugungsrückstandes, der in der Hauptsache aus Kieselsäure und einer Nickel, Eisen und Magnesium enthaltenden Lauge besteht (Laugungsstufe); eine Stufe zur Trocknung der Lauge zur Erzielung eines trockenen Produkts, in der Hauptsache bestehend aus Nickel-, Eisen- und Magnesiumchloriden, um die nichtumgesetzte Chlorwasserstoffsäure zurückzugewinnen (Trocknungsstufe), eine Stufe zum Rösten des trockenen Produkts bei einer Temperatur von mindestens 150°C und höchstens 250°C zur Überführung der gesamten Menge an Nickel und Eisen sowie eines Teils des Magnesiums in eine wasserunlösliche Masse und zur Rückgewinnung von Chlorwasserstoff (Röststufe) und eine Stufe der Wäsche des Röstprodukts mit Wasser, um es in Form einer wasserunlöslichen, das gesamte Nickel und Eisen und einen Teil des Magnesiums des Erzes und eine wässerige Lösung von Magnesiumchlorid enthaltenden Masse abzutrennen (Waschstufe).

## Revendications

1. Procédé de traitement de minerais de nickel-magnésium silicatés comprenant une étape de lixiviation du minerai avec de l'acide chlorhydrique pour obtenir des rebuts de lixiviation essentiellement composés de silice et un produit lessiviel contenant du nickel, du fer et du magnésium (étape de lixiviation) ; une étape de séchage du produit lessiviel pour obtenir un produit sec essentiellement composé de chlorures de nickel, de fer et de magnésium et pour récupérer l'acide chlorhydrique n'ayant pas réagi (étape de séchage) ; une étape de grillage du produit sec à une température non inférieure à 150°C et inférieure à 250°C pour convertir la totalité du nickel et du fer et une partie du magnésium en une masse insoluble dans l'eau et pour récupérer le gaz chlorhydrique (étape de grillage) et une étape de lavage du produit de grillage avec de l'eau pour séparer le produit en une masse insoluble dans l'eau contenant la totalité du nickel et du fer et une partie du magnésium du minerai et une solution aqueuse de chlorure de magnésium (étape de lavage).
